# EUROPEAN PATENT APPLICATION

(11) **EP 2 423 246 A1**
(43) Date of publication of application: **29.02.2012**
(21) Application number: 09843681.9
(22) Date of filing: 30.10.2009
(51) Int. Cl.: C08J 3/075, C08L 1/08

(54) **METHOD FOR PRODUCING GEL OF CARBOXYMETHYL CELLULOSE ALKALI METAL SALT**

(30) Priority: 20.04.2009 JP 2009102427
(71) Applicant: Japan Atomic Energy Agency, Naka-gun Ibaraki 319-1184 (JP); Kyoto Kagaku Co., Ltd., Kyoto-shi, Kyoto 612-8388 (JP)
(72) Inventor: TAKIGAMI Machiko, Kiryu-shi Gunma 376-0053 (JP); HIROKI Akihiro, Takasaki-shi Gunma 370-1292 (JP); NAGASAWA Naotsugu, Takasaki-shi Gunma 370-1292 (JP); MIYAI Kozo, Kyoto-shi Kyoto 612-8388 (JP); OKAMURA Susumu, Osaka 541-0056 (JP)
(74) Representative: Calamita, Roberto
(86) International application number: PCT/JP2009/068715
(87) International publication number: WO 2010/122687

(57) **Abstract**

To provide a method for producing a gel of a carboxymethyl cellulose alkali metal salt, in which a gel having high elasticity and strength and also having excellent water retention and durability can be obtained inexpensively and simply.

The method for producing a gel of a carboxymethyl cellulose alkali metal salt of the present invention includes previously mixing a mixture containing a carboxymethyl cellulose alkali metal salt and a water retention agent and subsequently mixing the resulting mixture with an acid aqueous solution to obtain a gel.

## Description

### [Technical Field]

The present invention relates to a method for producing a gel of a carboxymethyl cellulose alkali metal salt.

### [Background Art]

A carboxymethyl cellulose (CMC) alkali metal salt is a water-soluble polymer which is produced from natural pulp as a raw material, is high in safety, and is most generally used at present.

In view of the fact that crosslinking is formed between molecules of CMC, the CMC molecules take a three-dimensional network structure, and a gel which firmly retains water in the inside of this network structure is obtained. As a method of obtaining a gel in which crosslinking is formed between the molecules of CMC, specifically, there are known a method of producing a CMC gel with a polyvalent metal ion (for example, Patent Document 1); and a method of adding a crosslinking agent (for example, Patent Document 2).

However, these methods involved such a problem that it is difficult to produce a gel having high elasticity.

Also, as another method of obtaining a gel in which crosslinking is formed between the molecules of CMC, there is known a method in which water is added to CMC, and the mixture is mixed in a paste form, followed by irradiation with radiation (for example, Patent Document 3).

However, in this method, a radiation irradiation apparatus is required, so that there was involved such a problem that the gel production lacks simplicity.

As a method for improving the foregoing problems, the present inventors proposed a method of forming a hydrogen bond between the CMC molecules by the addition of an acid to CMC (Patent Document 4). Also, for the purpose of increasing the strength of a gel, the present inventors proposed a method of adding a water-insoluble inorganic metallic compound (Patent Document 5) or an organic compound (Patent Document 6).

[Patent Document 1] JP-A-7-90121
[Patent Document 2] JP-A-10-251447
[Patent Document 3] JP-A-2005-82800
[Patent Document 4] JP-A-2008-69315
[Patent Document 5] JP-A-2008-230996
[Patent Document 6] JP-A-2009-024089

### [Disclosure of Invention]

### [Problem to be solved by the Invention]

However, although the methods according to the proposals by the present inventors improve the foregoing gel physical properties and simplicity of the gel production, there was involved such a problem that moisture in the gel is easy to evaporate, so that there may be the case where such methods are not suited for an application requiring water retention. Also, since the gel strength is gradually lowered, there was involved such a problem that the application is restricted.

In view of the foregoing circumstances, the present invention has been made, and an object thereof is to provide a method for producing a gel of a carboxymethyl cellulose alkali metal salt, in which a gel having high elasticity and strength and also having excellent water retention and durability can be obtained inexpensively and simply.

### [Means for Solving the Problem]

In order to solve the foregoing problem, the present invention is characterized as follows.

(1) A method for producing a gel of a carboxymethyl cellulose alkali metal salt, comprising previously mixing a mixture containing a carboxymethyl cellulose alkali metal salt and a water retention agent and subsequently mixing the resulting mixture with an acid aqueous solution to obtain a gel.
(2) The method for producing a gel of a carboxymethyl cellulose alkali metal salt as set forth above in (1), wherein a blending amount of the carboxymethyl cellulose alkali metal salt is from 3 to 64 % by mass relative to the whole amount of blending components of the gel.
(3) The method for producing a gel of a carboxymethyl cellulose alkali metal salt as set forth above in (1) or (2), wherein a blending amount of the water retention agent is from 5 to 60 % by mass relative to the whole amount of blending components of the gel.
(4) The method for producing a gel of a carboxymethyl cellulose alkali metal salt as set forth above in any one of (1) to (3), wherein a quality stabilizer is further blended.

### [Effects of the Invention]

According to the present invention, a gel of a carboxymethyl cellulose alkali metal salt having high elasticity and strength and also having excellent water retention and durability can be obtained inexpensively and simply.

That is, as compared with the production method of achieving crosslinking by using a polyvalent metal ion and the production method of using a crosslinking agent, a gel having high elasticity and excellent water retention and durability can be obtained, and also, since expensive equipment such as a radiation irradiation apparatus is not required, a gel can be produced inexpensively and simply.

Furthermore, as compared with the production method of using only an acid and the production method of adding a water-insoluble metallic compound or an organic compound as a reinforcing material, a gel having excellent water retention and durability can be obtained.

Then, according to the present invention, by previously mixing a mixture containing a carboxymethyl cellulose alkali metal salt and a water retention agent and subsequently mixing the resulting mixture with an acid aqueous solution, defoaming after adding the acid becomes easy, and a time required for the production of a gel can be greatly shortened as compared with blending procedures other than this.

Since the gel obtained by the present invention is produced using, as a raw material, CMC which is a plant-derived material, it is an environmentally friendly gel and is useful for livestock excrement treatment materials, wastewater treatment materials, deodorants, impact absorption materials, medical adhesive materials, medical putties, and the like.

### [Brief Description of Drawings]

Fig. 1 is a flowchart showing a diagrammatic configuration of a production method of a CMC gel in an embodiment of the present invention.
Fig. 2 is a graph showing a variation with time of mass of a CMC gel (20°C) in Example 1 and Comparative Example 1.
Fig. 3 is a graph showing a variation with time of compression failure strength of a CMC gel in Example 2.
Fig. 4 is a graph showing a variation with time of compression failure strength of a CMC gel in Comparative Example 2.
Fig. 5 is a graph showing a variation with time of compression modulus of a CMC gel in Example 3 and Comparative Example 3.

### [Best Mode for Carrying Out the Invention]

The present invention is hereunder described in detail.

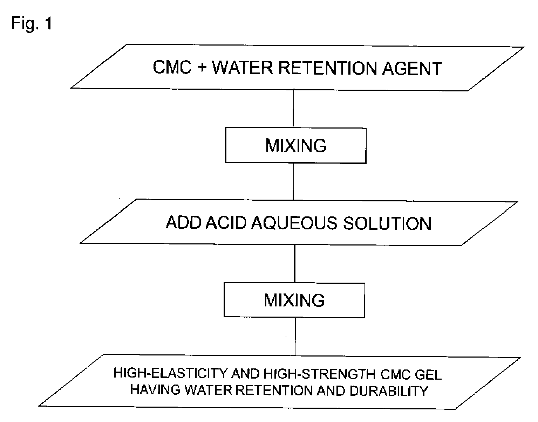

The production method of a CMC gel according to the present invention comprises previously mixing a mixture containing a carboxymethyl cellulose alkali metal salt and a water retention agent and subsequently mixing the resulting mixture with an acid aqueous solution to obtain a gel. A diagrammatic configuration of the production method of a CMC gel in an embodiment of the present invention is shown in Fig. 1 in terms of a flowchart.

Specific examples of CMC which is used in the present invention include a carboxymethyl cellulose sodium salt, a carboxymethyl cellulose potassium salt, and the like.

CMC is not particularly limited in degree of etherification, viscosity, and the like, and those which are suitable can be used in accordance with the case. The viscosity as referred to herein means a viscosity in the case where CMC is prepared as a 1 % by mass aqueous solution, and the high or low of viscosity exhibits indirectly the high or low of molecular weight.

So far as CMC can be uniformly mixed together with a water retention agent, an acid and water, a form of CMC to be blended into a mixture with the water retention agent may be a powder of CMC or an aqueous solution of CMC. In the case where CMC is blended in an aqueous solution form into the mixture, from the standpoint of making mixing simple and easy, it is preferable to regulate a CMC concentration of the aqueous solution to 3 % by mass or more.

A blending amount of CMC in the mixture is preferably from 3 to 64 % by mass, and more preferably from 5 to 30 % by mass relative to the whole amount of blending components of the gel. When the blending amount of CMC is too small, there may be the case where a CMC gel having sufficient strength is not obtained, whereas when the blending amount of CMC is too large, there may be the case where it is difficult to uniformly mix the mixture.

In the present invention, the water retention agent is especially important for the purpose of enhancing the elasticity, strength, water retention and durability of the obtained CMC gel. In the present invention, by adding the water retention agent together with an acid to CMC, a CMC gel having high elasticity and strength and also having excellent water retention and durability can be obtained.

Specific examples of the water retention agent which is used in the present invention include sugars such as maltitol, lactitol, trehalose, maltose, hyaluronic acid (for example, average molecular weight: not more than 1,200,000), sorbitol, erythritol, xylitol, mannitol, sodium alginate (average molecular weight: not more than 1,000,000), and the like; polyhydric alcohols such as glycerin, ethylene glycol, propylene glycol, diethylene glycol, dipropylene glycol, diglycerin, 1,5-pentanediol, 1,3-butanediol, 1,2-butanediol, polyethylene glycol (for example, average molecular weight: 200 to 3,500,000), polypropylene glycol (for example, average molecular weight: 300 to 4,000), and the like; esters such as propylene glycol alginate, glycerol triacetate, propylene glycol diacetate, and the like; and so on. These may be used singly or in combination of two or more kinds thereof.

In order to obtain a CMC gel having excellent elasticity, strength and durability of gel, sorbitol, trehalose, maltose, glycerin, ethylene glycol, polyethylene glycol, and propylene glycol are preferable.

A blending amount of the water retention agent in the mixture is preferably from 5 to 60 % by mass, and more preferably from 10 to 50 % by mass relative to the whole amount of blending components of the gel. When the blending amount of the water retention agent is too small, there may be the case where the strength, elasticity, water retention and durability of the CMC gel are insufficient, whereas when the blending amount of the water retention agent is too large, there may be the case where the CMC gel becomes non-uniform, so that a CMC gel having sufficient strength is not obtained.

The acid which is used in the present invention may be any of an organic acid and an inorganic acid, and specific examples thereof include hydrochloric acid, sulfuric acid, phosphoric acid, polyphosphoric acid, nitric acid, formic acid, acetic acid, lactic acid, malic acid, succinic acid, itaconic acid, maleic acid, oxalic acid, citric acid, and so on. These may be used singly or in combination of two or more kinds thereof.

In blending an acid, from the standpoints of making mixing simple and easy, and the like, the acid is blended as an acid aqueous solution. Although an acid concentration of the acid aqueous solution is not particularly limited, from the standpoint of making mixing simple and easy, the acid concentration is preferably in the range of from 0.1 to 3 M. When the acid concentration is high, the progress of gelation tends to become fast. Therefore, when the acid concentration is too high, there may be the case where the gelation proceeds in a moment, it is difficult to uniformly mix the acid, and it is difficult to obtain a CMC gel having high elasticity and strength and having excellent water retention and durability.

Also, a blending amount of the acid aqueous solution is preferably from 35 to 87 % by mass, and more preferably from 40 to 80 % by mass relative to the whole amount of blending components of the gel. When the blending amount of the acid aqueous solution is too small, there may be the case where the CMC gel becomes non-uniform, so that a CMC gel having sufficient strength is not obtained, whereas when the blending amount of the acid aqueous solution is too large, there may be the case where it is difficult to obtain a CMC gel having sufficient water retention.

In the present invention, for the purpose of more enhancing the storage stability and durability of the CMC gel, a quality stabilizer can be blended as a blending component of the gel. Specific examples of the quality stabilizer include alcohols such as ethanol, isopropyl alcohol, and the like; antimicrobial agents such as phenoxyethanol, phenoxypropanol, benzoic acid, and the like; p-hydroxybenzoic acid esters; and so on.

A blending amount of the quality stabilizer may be one which is suitable in accordance with the kind and use purpose of the quality stabilizer and is not particularly limited. For example, it is from 0.1 to 5 % by mass relative to the whole amount of blending components of the gel.

Incidentally, at the time of blending the quality stabilizer into the mixture, any timing may be properly taken in accordance with the kind of the quality stabilizer or other conditions and is not particularly limited. For example, the quality stabilizer can also be added to the mixture containing CMC and the water retention agent upon being dissolved in the acid aqueous solution.

In the present invention, the mixture of a carboxymethyl cellulose alkali metal salt and a water retention agent is previously mixed, and subsequently, the resulting mixture is mixed with an acid aqueous solution. According to this, a time required for the production of a gel can be greatly shortened. That is, by previously mixing the carboxymethyl cellulose alkali metal salt and the water retention agent, defoaming after adding the acid becomes easy. According to other procedures than this, for example, in the case of mixing the water retention agent and the acid aqueous solution and subsequently mixing this mixed liquid with the carboxymethyl cellulose alkali metal salt, or other cases, a time required defoaming after mixing becomes long.

For mixing of the mixture, a commercially available mixer can be used. For example, the mixture may be directly stirred using a screw type stirrer or the like, or the mixture charged in a container may be mixed in a method of revolving the container while rotating as in a super mixer "THINKY MIXER", manufactured by Thinky Corporation.

At the time of mixing, a temperature when the mixture after adding the acid aqueous solution is mixed is preferably set up at a temperature of lower than about 70°C from the standpoint of suppressing hydrolysis of CMC. In general, since there is a tendency that the higher the temperature at the time of mixing, the more quickly the gelation proceeds, it is desirable to allow the gelation to proceed by properly setting up the temperature at the time of mixing taking into consideration a degree of mixing with CMC and a degree of progress of the gelation due to a difference in the type or use amount of the water retention agent, and rendering the water retention and the quality stabilizer in a uniformly mixed state.

Incidentally, even in the case where the concentration of CMC or the concentration of the acid aqueous solution is high, the gelation tends to quickly proceed, and therefore, it is desirable to properly set up it in combination with the temperature at the time of mixing.

The desired CMC gel can be obtained by allowing the resulting mixture to stand at a prescribed temperature for a prescribed time. Such conditions of the temperature and standing time may be properly set up in accordance with the use purpose of the gel and the like.

According to the method of the present invention as described above, by blending CMC, the water retention agent and the acid aqueous solution in the foregoing specified procedures and mixing the mixture to achieve gelation, a CMC gel having high elasticity and strength and also having excellent water retention and durability can be obtained inexpensively and simply without requiring a special apparatus. The gel obtained by the present invention uses plant-derived CMC as a raw material, and therefore, it is an environmentally friendly gel of an environmental preservation type. In consequence, the CMC gel obtained by the present invention can be utilized in fields of a wide range including agriculture, industry, medical service, cosmetics, foodstuffs, and the like, and for example, it can be suitably used for livestock excrement treatment materials, wastewater treatment materials, deodorants, catalyst carriers, impact absorbers, handcraft articles, cosmetic pack sheets, medical adhesive materials, medical putties, and the like

### [Examples]

The present invention is hereunder described in more detail by reference to the Examples, but it should be construed that the present invention is not limited to these Examples at all.

Incidentally, in the following Examples and Comparative Examples, a super mixer "THINKY MIXER", manufactured by Thinky Corporation was used for mixing of a mixture having CMC and the like blended therein.

### <Example 1>

Commercially available CMC (CMC1380, manufactured by Daicel Chemical Industries, Ltd., degree of etherification: 1.36, viscosity of an aqueous solution thereof having a concentration of 1 % by mass at 25°C: 1,640 mPa-s), a water retention agent, and a citric acid aqueous solution were mixed in a composition shown in Table 1. Specifically, CMC and the water retention agent were previously mixed, and subsequently, the obtained mixture of CMC and the water retention agent was mixed with the citric acid aqueous solution. After mixing, a sample was molded in a columnar form having a diameter of 2 cm and a thickness of 1 cm, charged in a hermetic container, and then stored at 30°C for 10 days.

Thereafter, the sample was classified into three groups, and each five specimens were placed on a Petri dish and stored at 20°C, 30°C, and 50°C, respectively under a ventilation condition, and a variation of mass of the sample was examined.

### <Comparative Example 1>

Commercially available CMC (CMC1380, manufactured by Daicel Chemical Industries, Ltd., degree of etherification: 1.36, viscosity of an aqueous solution thereof having a concentration of 1 % by mass at 25°C: 1,640 mPa·s) and a citric acid aqueous solution were mixed in a composition shown in Table 1. A sample was molded in a columnar form having a diameter of 2 cm and a thickness of 1 cm, charged in a hermetic container, and then stored at 30°C for 10 days.

Thereafter, the sample was classified into three groups, and each five specimens were placed on a Petri dish and stored at 20°C, 30°C, and 50°C, respectively under a ventilation condition, and a variation of mass of the sample was examined.

**[Table 1]**

| Symbol in Fig. 2 | Example/ Comparative Example | Gel composition | | | | |
|---|---|---|---|---|---|---|
| | | CMC1380 (% by mass) | Water retention agent | | Citric acid aqueous solution | |
| | | | Type | Blending amount (% by mass) *¹ | Concentration (M) | Blending amount (% by mass) |
| ◇ | Example 1 | 10 | Ethylene glycol | 30 | 0.75 | 60 |
| ◆ | Example 1 | 10 | Glycerin | 30 | 0.75 | 60 |
| Δ | Examples 1 | 10 | Sorbitol | 30 | 0.75 | 60 |
| ▲ | Example 1 | 10 | Polyethylene glycol 200 | 30 | 0.75 | 60 |
| □ | Example 1 Exampie 1 | 10 | Isomerized liquid sugar: DAIYAFURAKUTO p-o *² | 30 | 0.75 | 60 |
| ○ | Comparative Example 1 | 10 | No | 0 | 0.5 | 90 |
| ● | Comparative Example 1 | 10 | No | 0 | 0.75 | 90 |

| | | | | | | |
|---|---|---|---|---|---|---|
| *1: Reduced into solids content *2: Manufactured by San-ei Sucrochemical Co., Ltd. | | | | | | |

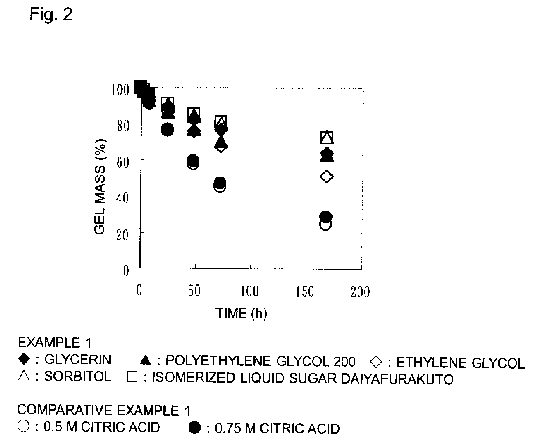

The measurement results of a variation of mass at 20°C of Example 1 and Comparative Example 1 are shown in Fig. 2. In the sample of Example 1 in which the water retention agent was added, a reduction of mass of the gel was suppressed. On the other hand, in the sample of Comparative Example 1 in which only CMC and the citric acid aqueous solution were kneaded without adding the water retention agent, a reduction mass of the gel was conspicuous regardless of the concentration of the acid. In Example 1 and Comparative Example 1, the results obtained by measuring at 30°C and 50°C, respectively also revealed the same tendency as that in Fig. 2.

### <Example 2>

Commercially available CMC (CMC1380, manufactured by Daicel Chemical Industries, Ltd., degree of etherification: 1.36, viscosity of an aqueous solution thereof having a concentration of 1 % by mass at 25°C: 1,640 mPa·s), a water retention agent, and a citric acid aqueous solution were mixed in a composition shown in Table 2. Specifically, CMC and the water retention agent were previously mixed, and subsequently, the obtained mixture of CMC and the water retention agent was mixed with the citric acid aqueous solution. After mixing, a sample was molded in a columnar form having a diameter of 2 cm and a thickness of 1 cm, charged in a hermetic container, and then stored at 30°C. Incidentally, the respective samples of Example 2 were prepared in such a manner that the amounts of citric acid were equal to each other.

**[Table 2]**

| Symbol in Figs. 3 and 4 | Example/ Comparative Example | Gel composition | | | | |
|---|---|---|---|---|---|---|
| | | CMC1380 (% by mass) | Water retention agent | | Citric acid aqueous solution | |
| | | | Type | Blending amount (% by mass) | Concentration (M) | Blending amount (% by mass) |
| ○ | Example 2 | 10 | Propylene glycol | 10 | 0.56 | 80 |
| Δ | Example 2 | 10 | Propylene glycol | 20 | 0.64 | 70 |
| □ | Example 2 | 10 | Propylene glycol | 30 | 0.75 | 60 |
| ◇ | Example 2 | 10 | Propylene glycol | 45 | 1 | 45 |
| | Example 2 | 10 | Ethylene glycol | 30 | 0.75 | 60 |
| | Example 2 | 10 | Glycerin | 30 | 0.75 | 60 |
| | Example 2 | 10 | Polyethylene glycol 200 | 30 | 0.75 | 60 |
| ● | Comparative Example 2 | 10 | No | 0 | 0.75 | 90 |
| ○ | Comparative Example 2 | 10 | No | 0 | 0.5 | 90 |

Thereafter, each of the samples was measured for compression failure strength of the gel. The compression failure strength was measured by compression using a compact table-top universal tester, EZTest (EZ-L), manufactured by Shimadzu Corporation and using a stainless steel-made compression jig having a diameter of 5 cm at a rate of 2 mm/min.

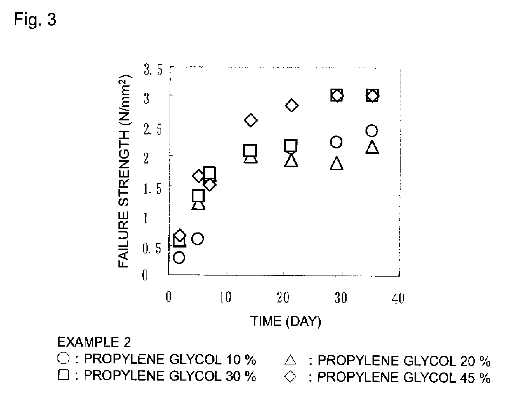

The results obtained by using propylene glycol as the water retention agent are shown in Fig. 3. The gel strength became high with an increase of the concentration of propylene glycol, and after elapsing a certain period of time, the gel strength became constant. A lowering of the gel strength was not observed within a period of measurement of the gel strength, and it became clear that a gel having durability was obtained. In the case of using ethylene glycol, glycerin and polyethylene glycol, respectively, the gel strength was similarly high, and a lowering of the gel strength was not observed for 40 days after the gel preparation.

### <Comparative Example 2>

Commercially available CMC (CMC1380, manufactured by Daicel Chemical Industries, Ltd., degree of etherification: 1.36, viscosity of an aqueous solution thereof having a concentration of 1 % by mass at 25°C: 1,640 mPa·s) and a citric acid aqueous solution were mixed in a composition shown in Table 2. A sample was molded in a columnar form having a diameter of 2 cm and a thickness of 1 cm, charged in a hermetic container, and then stored at 30°C.

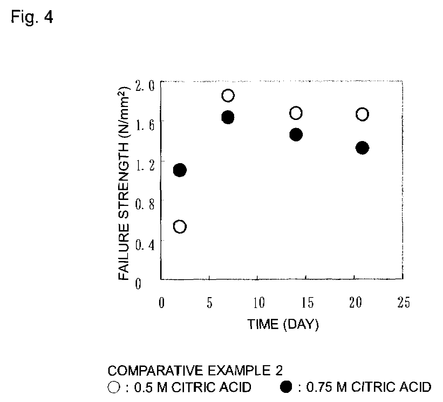

Thereafter, each of the samples was measured for compression failure strength of the gel under the same condition as that in Example 1. The results are shown in Fig. 4. When one week elapsed after the gel preparation, in each of the samples, the gel strength was gradually lowered. Also, the gel strength was low as about 1/2 as compared with that of the gel having the water retention agent blended therein shown in Fig. 3.

### <Example 3>

A compression modulus (5, 10 N) of the gel composed of 10 % by mass of CMC 1380, 30 % by mass of propylene glycol and 60 % by mass of a 0.75 M citric acid aqueous solution as prepared in Example 2 was measured by compression using a compact table-top universal tester, EZTest (EZ-L), manufactured by Shimadzu Corporation and using a stainless steel-made compression jig having a diameter of 5 cm at a rate of 2 mm/min.

Incidentally, in a stress-strain curve, in the case where the strain at the time of a stress of 5 N and 10 N is defined as S5 and S10, respectively, the compression modulus (5, 10 N) is one obtained by dividing a difference in stress (10 N-5 N) by a difference in strain (S10 - S5) and expressing the resultant value per unit area.

### Comparative Example 3>

A compression modulus (5, 10 N) of the gel composed of 10% by mass of CMC 1380 and 90 % by mass of a 0.75 M citric acid aqueous solution as prepared in Comparative Example 2 was measured under the same condition as that in Example 3.

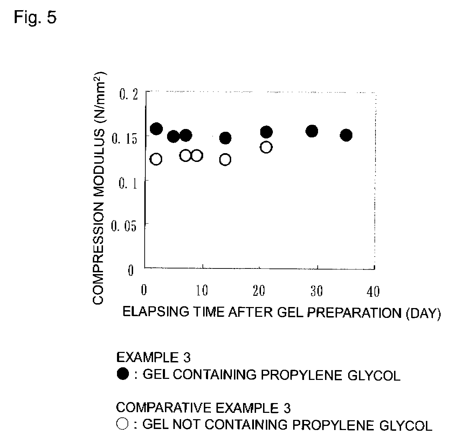

The measurement results of Example 3 and Comparative Example 3 are shown in Fig. 5. The gel of Example 3 in which propylene glycol was blended was a stable gel in which the compression modulus was high, and a variation in the compression modulus was not substantially observed within a period of measurement, and which had durability. On the other hand, in the sample of Comparative Example 3 in which only CMC and the citric acid aqueous solution were mixed without blending the water retention agent, the compression modulus was about 0.8 times as compared with that of the gel of Example 3.

### <Example 4>

Each of commercially available CMCs having a degree of etherification of from 1.15 to 1.45 (three types of Celogen HE-1500F, HE-600F and HE-90F, manufactured by Dai-ichi Kogyo Seiyaku Co., Ltd., viscosity of each of aqueous solutions thereof having a concentration of 1 % by mass at 25°C: 3,000 mPa·s, 900 mPa·s and 200 mPa·s, respectively), a water retention agent, a citric acid aqueous solution, and a quality stabilizer were mixed in a composition shown in Table 4. Specifically, CMC and the water retention agent were previously mixed, and subsequently, the obtained mixture of CMC and the water retention agent was mixed with the citric acid aqueous solution. The quality stabilizer was dissolved in the citric acid aqueous solution and added to the mixture of CMC and the water retention agent. After mixing, a sample was molded in a columnar form having a diameter of 2 cm and a thickness of 1 cm, charged in a hermetic container, and then stored at 30°C.

Thereafter, physical properties of the gel were measured by using a compact table-top universal tester, EZTest (EZ-L), manufactured by Shimadzu Corporation under the same condition as that in Examples 2 and 3.

### comparative Example 4>

Commercially available CMC (Celogen HE-1500F, manufactured by Dai-ichi Kogyo Seiyaku Co., Ltd., viscosity of an aqueous solution thereof having a concentration of 1 % by mass at 25°C: 3,000 mPa·s), a 0.5 M citric acid aqueous solution, and water were mixed in a composition shown in Table 3. A sample was molded in a columnar form having a diameter of 2 cm and a thickness of 1 cm, charged in a hermetic container, and then stored at 30°C.

Thereafter, physical properties of the gel were measured by using a compact table-top universal tester, EZTest (EZ-L), manufactured by Shimadzu Corporation under the same condition as that in Example 4.

The measurement results of Example 4 and Comparative Example 4 are shown in Table 3.

**[Table 3]**

| Example/ Comparative Example | Gel composition | | | | | | | | | Physical properties | |
|---|---|---|---|---|---|---|---|---|---|---|---|
| | CMC | | Water retention agent | | Acid aqueous solution | | Water | Quality stabilizer | | Elapsing time after gel preparation (Day) | Compression failure strength (N/mm²) |
| | Type | Blending amount (% by mass) | Type | Blending amount (% by mass) | Type [Concentration (M)] | Blending amount (% by mass) | | Type | Blending amount (% by mass) | | |
| Example 4 | Celogen HE-1500F | 7 | Propylene glycol | 30 | Citric acid [0.5] | 58 | 0 | Ethanol | 5 | 12 | 1.43 |
| Example 4 | Celogen HE-600F | 7 | Propylene 30 glycol | | Citric acid [0.5] | 58 | 0 | Ethanol | 5 | 12 | 1.93 |
| Example 4 | Celogen HE-90F | 7 | Propylene glycol | 30 | Citric acid [0.5] | 58 | 0 | Ethanol | 5 | 12 | 0.64 |
| Example 4 | Celogen HE-1500F | 7 | Propylene glycol | 30 | Citric acid [0 5] | 58 | 0 | Ethanol | 5 | 53 | 4.17 7 |
| Example 4 | Gelogen HE-1500F | 7 | Propylene glycol | 30 | Citric acid [0.5] | 58 | 0 | Ethanol | 5 | 384 | 1.38 |
| Example 4 | Celogen HE-600F | 7 | Propylene goycol | 30 | Citric acid [0.5] | 58 | 0 | Ethanol | 5 | 384 | 3.00 |
| Example 4 | Celogen HE-90F | 7 | Propylene glycol | 30 | Citric acid [0.5] | 58 | 0 | Ethanol | 5 | 384 | >4.78 |
| Example 4 | Celogen HE-1500F | 10 | Propylene glycol | 45 | Citric acid [0.5] | 45 | 0 | No | 0 | 53 | 5.16 |
| Example 4 | Celogen HE-1500F | 7 | Ethylene glycol | 30 | Citric acid [0.5] | 58 | 0 | Ethanol | 5 | 384 | 1.12 |
| Example 4 | Celogen HE-1500F | 30 | Polyethylene glycol 200 | 30 | Citric acid [0.5] | 58 | 0 | Ethanol | 5 | 384 | 0.84 |
| Example 4 | Celogen HE-1500F | 7 | Glycerol | 30 | Citric acid [0.5] | 58 | 0 | Ethanol | 5 | 384 | 0.73 |
| Comparative Example 4 | Celogen HE-1500F | 7 | No | 0 | Citric acid [0.5] | 58 | 35 | No | 0 | 12 | 1.07 |
| Comparative Example 4 | Celogen HE-1500F | 10 | No | 0 | Citric acid [0.5] | 58 | 5 | No | 0 | 300 | 0.72 |

The gel of Example 4 having propylene glycol blended therein exhibited a high compression failure strength upon storage for 53 days and even for 384 days after the gel preparation. On the other hand, in the sample of Comparative Example 4 in which only CMC and the citric acid aqueous solution were mixed, the compression failure strength was low as compared with that of the gel of Example 4. Although the gels of Example 2 and Example 3 were concerned with CMC of a different manufacturer, regardless of the manufacture and the degree of etherification of CMC, it is noted that the gels having the water retention agent added thereto are higher in the strength than the gels having no water retention agent added thereto.

### <Example 5>

10 % by mass of commercially available CMC (CMC1380, manufactured by Daicel Chemical Industries, Ltd., degree of etherification: 1.36, viscosity of an aqueous solution thereof having a concentration of 1 % by mass at 25°C: 1,640 mPa·s), 30 % by mass of propylene glycol, a 0.5 M citric acid aqueous solution, and a quality stabilizer were mixed in a composition shown in Table 3. Specifically, CMC and propylene glycol were previously mixed, and subsequently, the obtained mixture of CMC and propylene glycol were mixed with the citric acid aqueous solution. The quality stabilizer was dissolved in the citric acid aqueous solution and added to the mixture of CMC and propylene glycol. After mixing, a sample was molded in a columnar form having a diameter of 2 cm and a thickness of 1 cm, charged in a hermetic container, and then stored at 30°C.

Thereafter, physical properties of the gel were measured by using a compact table-top universal tester, EZTest (EZ-L), manufactured by Shimadzu Corporation under the same condition as that in Examples 2 and 3. Also, three months after the gel preparation, the presence or absence of the generation of microorganisms was observed.

### <Referential Example 1>

10 % by mass of CMC 1380, 30 % by mass of propylene glycol, and 60 % by mass of a 0.5 M citric acid aqueous solution were mixed. Specifically, CMC and propylene glycol were previously mixed, and subsequently, the obtained mixture of CMC and propylene glycol were mixed with the citric acid aqueous solution. After mixing, a sample was molded in a columnar form having a diameter of 2 cm and a thickness of 1 cm, charged in a hermetic container, and then stored at 30°C.

Thereafter, physical properties of the gel were measured under the same condition as that in Example 5. Also, three months after the gel preparation, the presence or absence of the generation of microorganisms was observed.

The measurement and observation results of Example 5 and Referential Example 1 are shown in Table 4.

**[Table 4]**

| Example/ Referential Example | 0.5 M citric acid aqueous solution Blending amount (% by mass) | Quality stabilizer | | Generation of microorganisms (Observed three months after gel preparation) | Gel physical properties |
|---|---|---|---|---|---|
| | | Type | Blending amount (% by mass) | | |
| Example 5 | 59.5 | Phenoxyethanol | 0.5 | No | The same as that in the non-addition of quality stabilizer |
| Example 5 | 55 | Ethanol | 5 | No | Physical properties gradually increase. |
| Example 5 | 59.8 | Methylparaben | 0.2 | No | The same as that in the non-addition of quality stabilizer |
| Referential Example 1 | 60 | No | 0 | Molds were perceived on the surface. | |

In Example 5, in the case where the blending amount of the quality stabilizer was less than 1 %, influences by the quality stabilizer were not perceived in the physical properties of the gel. In the sample in which 5 % by mass of ethanol was blended as the quality stabilizer, the physical properties of the gel revealed a tendency of enhancement. Also, even when the gel was stored at 30°C for 3 months or more, no microorganism was observed in the gel, and the gel was not decomposed by microorganisms.

On the other hand, in the gel of Referential Example 1 in which the quality stabilizer was not blended, as a result of observation after storing at 30°C for 3 months, molds were perceived on the surface.

### <Example 6>

Commercially available CMC (Celogen HE-1500F, manufactured by Dai-ichi Kogyo Seiyaku Co., Ltd., viscosity of an aqueous solution thereof having a concentration of 1 % by mass at 25°C: 3,000 mPa·s), a 1 M citric acid aqueous solution, and propylene glycol were mixed in a composition shown in Table 5. Specifically, CMC and propylene glycol were previously mixed, and subsequently, the obtained mixture of CMC and propylene glycol was mixed with the citric acid aqueous solution. After mixing, the mixture was stored at 50°C.

Thereafter, the gel was punched out by a cork borer having a diameter of 2 cm, and physical properties of the gel were measured by using a compact table-top universal tester, EZTest (EZ-L), manufactured by Shimadzu Corporation under the same condition as that in Examples 2 and 3.

### <Comparative Example 5>

A gel was prepared in the same manner as that in Example 6, except that propylene glycol was not added, and physical properties of the gel were measured.

The measurement results of Example 6 and Comparative Example 5 are shown in Table 5.

**[Table 5]**

| Example / Comparative Example | Gel composition | | | | | | Physical properties | | Properties of gel |
|---|---|---|---|---|---|---|---|---|---|
| | CMC | | Water retention agent | | Acid aqueous solution | | Elapsing time after gel preparation (Day) | Failure strength (N/mrn²) | |
| | Type | Blending amount (% by mass) | Type | Blending amount (% by mass) | Type Concentration (M) | Blending amount (% by mass) | | | |
| Example 6 | Celogen HE-1500F | 5 | | PG 30 | Citric acid 1 | 65 | 21 | >8.30 | Soft gel |
| Comparative Example 5 | Celogen HE-1500F | 5 | No | - | Citric acid 1 | 95 | 21 | - | Weak gel Impossible for measurement of physical properties |
| Example 6 | Celogen HE-1500F | 5 | PG | 30 | Citric acid | 65 | 46 | >9.55 | Slightly contracted after compression |
| Comparative Example 5 | Celogen HE-1500F | 5 | No | - | Citric acid 1 | 95 | 46 | - | Weak gel Impossible for measurement of physical properties |

The gel of Example 6 having propylene glycol blended therein exhibited a high compression failure strength upon storage for 21 days and even for 46 days after the gel preparation.

On the other hand, the sample of Comparative Example 5 in which only CMC and the citric acid aqueous solution were mixed was concerned with a gel in a weakly aggregated state, so that the compression failure strength could not be measured.

In this way, in the case where the CMC concentration is 5 % by mass, it is noted that in the gel in which the water retention agent is not added, the gelation does not proceed, whereas in the gel having the water retention agent added thereto, the gelation proceeds, so that a gel having high strength is yielded.

### <Example 7>

Commercially available CMC (CMC1380, manufactured by Daicel Chemical Industries, Ltd., degree of etherification: 1.36, viscosity of an aqueous solution thereof having a concentration of 1 % by mass at 25°C: 1,640 mPa·s), a water retention agent, and a citric acid aqueous solution were mixed in a composition shown in Table 6. Specifically, CMC and the water retention agent were previously mixed, and subsequently, the obtained mixture of CMC and the water retention agent was mixed with the citric acid aqueous solution. After mixing, the mixture was stored at 50°C.

Thereafter, the gel was punched out by a cork borer having a diameter of 2 cm, and physical properties of the gel were measured by using a compact table-top universal tester, EZTest (EZ-L), manufactured by Shimadzu Corporation under the same condition as that in Examples 2 and 3.

The measurement results of Example 7 are shown in Table 6.

**[Table 6]**

| Example/ Comparative Example | Gel composition | | | | | Physical properties | | Properties of gel |
|---|---|---|---|---|---|---|---|---|
| | | CMC | Water retention | agent | Blending amount of 0.5 M citric acid (% by mass) | Elapsing time after gel preparation (Day) | Compression failure strength (N/mm²) | |
| | Type | Blending amount (% by mass) | Type | Blending amount (% by mass) | | | | |
| Example 7 | CMC1380 | 10 | Sodium alginate + propylene glycol | 10+40 | 40 | 21 | >9.55 | Contracted after compression |
| Example 7 | CMC1380 | 10 | Glycerol triacetate + propylene glycol | 10+30 | 50 | 21 | 5.44 | Contracted after compression |
| Example 7 | CMC1380 | 10 | Propylene glycol diacetate + propylene glycol | 10+30 | 50 | 21 | 4.01 | Contracted after compression |

The gels of Example 7 in which in addition to propylene glycol, other one kind of a material was blended as the water retention agent exhibited a high compression failure strength even upon storage for 21 days after the gel preparation.

In this way, it was noted that by using a combination of water retention agents, a gel having high strength can be fabricated.

### <Example 8>

In a plastic bag, 30 g of propylene glycol and 10 g of commercially available CMC (CMC1380, manufactured by Daicel Chemical Industries, Ltd., degree of etherification: 1.36, viscosity of an aqueous solution thereof having a concentration of 1 % by mass at 25°C: 1,640 mPa·s) were mixed, and subsequently, 60 g of a 0.5 M citric acid aqueous solution was added and mixed to fabricate a gel. A time required for mixing of propylene glycol and CMC, the addition of the citric acid aqueous solution, mixing, and up to defoaming was 5 minutes.

Thereafter, the sample was stored at 50°C, and a compression failure strength of the gel was measured under the same condition as that in Examples 2 and 3.

### <Comparative Example 6>

10 g of commercially available CMC (CMC1380, manufactured by Daicel Chemical Industries, Ltd., degree of etherification: 1.36, viscosity of an aqueous solution thereof having a concentration of 1 % by mass at 25°C: 1,640 mPa·s) was added to a mixed liquid of 60 g of a 0.5 M citric acid aqueous solution and 30 g of propylene glycol and mixed by using THINKY MIXER, and the resulting mixture was charged in a bag. A time required for mixing and up to defoaming was 45 minutes.

Thereafter, the sample was stored at 50°C, and a compression failure strength of the gel was measured under the same condition as that in Examples 2 and 3.

### <Comparative Example 7>

In a plastic bag, 30 g of ethanol and 10 g of commercially available CMC (CMC1380, manufactured by Daicel Chemical Industries, Ltd., degree of etherification: 1.36, viscosity of an aqueous solution thereof having a concentration of 1 % by mass at 25°C: 1,640 mPa·s) were mixed, and 60 g of a 0.5 M citric acid aqueous solution was added and mixed to fabricate a sample. A time required for mixing and up to defoaming was 5 minutes.

Thereafter, the sample was stored at 50°C, and a compression failure strength of the gel was measured under the same condition as that in Examples 2 and 3.

The observation results and measurement results of physical properties of Example 8 and Comparative Examples 6 and 7 are shown in Table 7.

**[Table 7]**

| Example/ Comparative Example | Order of sample fabrication | Time required for sample fabrication (min) | Properties immediately after sample fabrication | Compression failure strength (N/mm²) and properties | |
|---|---|---|---|---|---|
| | | | | After one day | After four days |
| Example 8 | (Propylene glycol + CMC) + acid aqueous solution | 5 | Uniform and transparent | >5.9 Substantially gelated and transparent. When compressed, the gel spread. Contraction of the gel was not substantially observed. | >5.9 Gelated and transparent. When compressed, the gel spread. When a load was removed, the gel was contracted. |
| Comparative Example 6 | CMC + (propylene glycol + acid aqueous solution) | 45 | A non-uniform (lump) portion was observed. Other portion was transparent. | >5.9 Gelated and transparent. When compressed, the gel spread. When a load was removed, the gel was contracted. | >5.9 Gelated and transparent. When compressed, the gel spread. When a load was removed, the gel was contracted. |
| Comparative Example 7 | (Ethanol + CMC) + acid aq ueo us solution | 5 | Uniform and cloudy | Not gelated and cloudy | Not gelated and slightly cloudy |

In Example 8, at a point of time of mixing CMC in propylene glycol and adding the acid aqueous solution thereto, curing started, and a time required for the gel fabrication was only 5 minutes. Immediately after the gel fabrication, the gel was already uniform. It may be considered that by mixing CMC in propylene glycol, air in CMC is removed, defoaming after adding the acid becomes easy. One day after the gel fabrication, although the gelation was not complete, after 4 days, the mixture was completely gelated. One day and four days after the gel fabrication, the gel strength was high, and even when a load of 5.9 N/mm² was applied, the gel was not broken.

On the other hand, in Comparative Example 6, although the gel was fabricated by adding CMC to the mixed liquid of propylene glycol and the acid aqueous solution and kneading the mixture, immediately after the fabrication, a lump was perceived, too. However, at a point of time of elapsing one day after the gel fabrication, the gel was uniform, and the gelation was complete. One day and four days after the gel fabrication, the gel strength was high, and even when a load of 5.9 N/mm² was applied, the gel was not broken.

In Comparative Example 7, at a point of time of mixing CMC in ethanol and adding the acid aqueous solution thereto, the mixture was cloudy. Although curing did not occur, a time required for mixing all of the materials and up to defoaming was only 5 minutes. However, even storing at 50°C for one day and even for four days, the gelation did not proceed, so that the physical properties could not be measured.

## Claims

1. A method for producing a gel of a carboxymethyl cellulose alkali metal salt, comprising previously mixing a mixture containing a carboxymethyl cellulose alkali metal salt and a water retention agent and subsequently mixing the resulting mixture with an acid aqueous solution to obtain a gel.

2. The method for producing a gel of a carboxymethyl cellulose alkali metal salt according to claim 1, wherein a blending amount of the carboxymethyl cellulose alkali metal salt is from 3 to 64 % by mass relative to the whole amount of blending components of the gel.

3. The method for producing a gel of a carboxymethyl cellulose alkali metal salt according to claim 1 or 2, wherein a blending amount of the water retention agent is from 5 to 60 % by mass relative to the whole amount of blending components of the gel.

4. The method for producing a gel of a carboxymethyl cellulose alkali metal salt according to any one of claims 1 to 3, wherein a quality stabilizer is further blended.
